# EUROPEAN PATENT SPECIFICATION

(11) **EP 3 605 946 B1**
(45) Date of publication and mention of the grant of the patent: **04.05.2022**
(21) Application number: 18207991.3
(22) Date of filing: 23.11.2018
(51) Int. Cl.: H04L 9/32

(54) **DISTRIBUTED LEDGER-BASED ENTERPRISE RESOURCE PLANNING SYSTEM**
VERTEILTES LEDGER-BASIERTES UNTERNEHMENSRESSOURCENPLANUNGSSYSTEM
SYSTÈME DE PLANIFICATION DE RESSOURCES D'ENTREPRISE DISTRIBUÉ À BASE DE REGISTRE

(30) Priority: 01.08.2018 US 201816052113
(43) Date of publication of application: 05.02.2020
(73) Proprietor: SAP SE, 69190 Walldorf (DE)
(72) Inventor: KUMAR, Abhinav, 69190 Walldorf (DE); ROHATGI, Vikas, 69190 Walldorf (DE)
(74) Representative: Müller-Boré & Partner Patentanwälte PartG mbB

(56) References cited:
- US-A1- 2017 046 698
- Github: "Quorum Whitepaper", , 22 November 2016 (2016-11-22), XP055496924, Retrieved from the Internet: URL:https://github.com/jpmorganchase/quoru m-docs/raw/master/Quorum%20Whitepaper%20v0 .1.pdf [retrieved on 2018-08-02]
- Andreas M. Antonopoulos: "Mastering Bitcoin - Unlocking Digital Cryptocurrencies" In: "Mastering bitcoin : [unlocking digital cryptocurrencies]", 20 December 2014 (2014-12-20), O'Reilly Media, Beijing Cambridge Farnham Köln Sebastopol Tokyo, XP055306939, ISBN: 978-1-4493-7404-4 * pages 161-173 *
- Melanie Swan: "E-COMMERCE", , 22 January 2015 (2015-01-22), XP055406241, Retrieved from the Internet: URL:http://w2.blockchain-tec.net/blockchai n/blockchain-by-melanie-swan.pdf [retrieved on 2017-09-13]

## Description

### TECHNICAL FIELD

This specification generally relates to accessing and verifying immutably persisted transaction data.

### BACKGROUND

An Enterprise Resource Planning (ERP) system integrates business functions into a complete system to, for example, streamline processes and information across an enterprise and to provide services within the enterprise's organizational boundaries. Example business functions include inventory, order management, accounting, human resources, customer relationship management (CRM), and so forth. The data entered into an ERP system through various modules, such as sales and distribution, materials management, or financials, may be stored in the enterprise's permissioned blockchain, which may be isolated to the enterprise's own ecosystem. Such an ecosystem may include, for example, vendors, suppliers, and auditors.

Github: "Quorum Whitepaper", 22 November 2016 (2016-11-22), XP055496924, URL.:https://github.com/jpmorganchase/quorum-docs/raw/master/Quorum%20Whitepaper%20v0.1.pdf relates to modifications to the standard Ethereum in order to support desired Enterprise requirements.

Thus, according to an aspect, the problem relates to how to increase security for verifying transaction data stored in a distributed ledger.

This problem is solved by the subject-matter of the independent claims. Preferred embodiments are defined in the dependent claims.

### SUMMARY

Implementations of the present disclosure are generally directed to a system that stores transaction data to a distributed ledger and provides access to the stored transaction data based on permissions. The described system provides verification data for each transaction without providing access to restricted information through the employment of a cryptographic hash function (CHF). The system also provides for the storage of smart contracts to the distributed ledger. Contract conditions programmatically implemented through the smart contract can be triggered automatically based on the storage of relevant transaction data.

In a general implementation, systems, apparatus, and methods for receiving and verifying transaction data stored to a distributed ledger include providing, to a permission management service, a request for transaction data stored to the distributed ledger. The transaction data may include information regarding a transaction involving a third-party enterprise. The transaction data, a transaction root hash, and verification data are received from the permission management service. A hash value is generated for the transaction data from a CHF. A local transaction root hash is generated based on the generated hash value for the transaction data and the received verification data. The transaction data is verified based on comparing the local transaction root hash to the received transaction root hash. The requested transaction data is provided to a client device based on the verification of the transaction data, the client device having been authenticated based on a credential of the third-party enterprise.

In another general implementation, one or more non-transitory computer-readable storage media coupled to one or more processors and having instructions stored thereon which, when executed by the one or more processors, cause the one or more processors to perform operations that include: providing, to a permission management service, a request for transaction data stored to the distributed ledger. The transaction data may include information regarding a transaction involving a third-party enterprise. The transaction data, a transaction root hash, and verification data are received from the permission management service. A hash value is generated for the transaction data from a CHF. A local transaction root hash is generated based on the generated hash value for the transaction data and the received verification data. The transaction data is verified based on comparing the local transaction root hash to the received transaction root hash. The requested transaction data is provided to a client device based on the verification of the transaction data, the client device having been authenticated based on a credential of the third-party enterprise.

In yet another general implementation, a system includes one or more processors; and a computer-readable storage device coupled to the one or more processors and having instructions stored thereon which, when executed by the one or more processors, cause the one or more processors to perform operations comprising: providing, to a permission management service, a request for transaction data stored to the distributed ledger. The transaction data may include information regarding a transaction involving a third-party enterprise. The transaction data, a transaction root hash, and verification data are received from the permission management service. A hash value is generated for the transaction data from a CHF. A local transaction root hash is generated based on the generated hash value for the transaction data and the received verification data. The transaction data is verified based on comparing the local transaction root hash to the received transaction root hash. The requested transaction data is provided to a client device based on the verification of the transaction data, the client device having been authenticated based on a credential of the third-party enterprise.

An aspect combinable with the general implementations, the key value pairs include date and time of the latest version of an application.

In an aspect combinable with any of the previous aspects, the third-party enterprise is restricted from access to other transaction data stored to the distributed ledger.

In an aspect combinable with any of the previous aspects, the verification data includes hash values for the other transaction data.

In an aspect combinable with any of the previous aspects, the verification data includes genesis block data, wherein the genesis block data is a first block in the distributed ledger, and wherein the genesis block data includes metadata about a hosting enterprise.

In an aspect combinable with any of the previous aspects, the hosting enterprise provides an ERP solution through the distributed ledger.

In an aspect combinable with any of the previous aspects, the verification data includes a nonce value of a block in the distributed ledger that stores the transaction data.

In an aspect combinable with any of the previous aspects, the method or operations include before providing the request for the transaction data to the permission management service, authenticating the client device based on the credential; and receiving the request for the transaction data from the client device.

In an aspect combinable with any of the previous aspects, the credential is a digital certificate.

In an aspect combinable with any of the previous aspects, the CHF is one of secure hash algorithm 256 (SHA-256), SHA-3, or message digest 5 (MD5).

In an aspect combinable with any of the previous aspects, the verification data provides a cryptographic proof of validity for the transaction data.

In an aspect combinable with any of the previous aspects, the method or operations include storing the transaction data to the distributed ledger triggering an execution of a contract condition implemented through a smart contract.

In an aspect combinable with any of the previous aspects, the transaction involving the third-party enterprise includes receiving goods from the third-party enterprise.

In an aspect combinable with any of the previous aspects, the contract condition implemented through the smart contract includes providing payment to the third-party enterprise for a receipt of the goods.

In an aspect combinable with any of the previous aspects, the execution of the contract condition includes determining external factors through a trusted oracle.

In an aspect combinable with any of the previous aspects, the external factors include a current currency exchange price.

Particular implementations of the subject matter described in this disclosure can be implemented so as to realize one or more of the following advantages. The described system use of a permission based distributed ledger and smart contracts in ERP systems provides transparency, trust, and real-time availability of verifiable and thus "trusted data." The described system may also provide data in real-time to auditing agencies and government bodies that require such data for various purposes while still maintaining data integrity. Through the employment of smart contracts that are stored to a distributed ledger, contract terms are self-executing and immutable. Thus, creating transparency within the system. Additionally, third-parties can track and verify statuses of associated transactions securely through the employment of the permissioned distributed ledger thereby reducing the number of conflicts. Moreover, transaction data can be easily accessed and verified due to immutable attributes and behavior of the distributed ledger.

It is appreciated that methods in accordance with the present disclosure can include any combination of the aspects and features described herein. That is, methods in accordance with the present disclosure are not limited to the combinations of aspects and features specifically described herein, but also may include any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF DRAWINGS

FIG. 1 depicts an example environment that can be employed to execute implementations of the present disclosure.
FIGS. 2A-2C depict an example ERP system according to implementations of the present disclosure.
FIG. 3 depicts a Merkle tree that may be employed by a blockchain.
FIG. 4 depicts a flow diagram of an example process for the fulfillment of a contract programmatically through a smart contract stored to a blockchain.
FIG. 5A-5C depict flow diagrams of an example processes employed within a distributed ledger based ERP system.
FIG. 6 depicts a block diagram of an exemplary computer system that can be employed to execute implementations of the present disclosure.

### DETAILED DESCRIPTION

Implementations of the present disclosure are generally directed to a distributed ledger based ERP system. More particularly, implementations of the present disclosure are directed to persisting transaction data to a distributed ledger and providing restricted access to the information on the ledger based on permissions. The permissions may be assigned to third-party enterprises to allow access to associated transaction data. The system enables users from the permissioned third-party enterprises to access and verify the respective transaction data. Smart contracts may also be stored to the distributed ledger. These smart contracts programmatically implement terms of a contact between a third-party enterprise and a hosting enterprise.

ERP systems deployed using a privatization model may inherently include issues such as difficulties with providing access to various outside entities, such as auditing firms and government agencies, as well as transparency to partner organizations, such as vendors and suppliers. For example, when a third-party vendor requires access to delivery information regarding goods that have been sent. As another example, an auditing firm or government agency requires access to the enterprise's transactional data for purposes, such as a statuary audit or otherwise general governance, granting such access may include a process that is separate from the primary system and/or requires distinct and additional resources (e.g., the manual generation and execution of scripts or batch processes that provide the required data to the requesting auditing firm or government agency). Such process may not provide the require data in real-time nor provide a means of data verification. These types of processes are inherently prone to data integrity issues.

Moreover, the execution of contracts within or in conjunction with such an ERP system may be performed manually and/or automated within the enterprise's organizational boundaries. Such solutions provide little to no transparency to partner, third-party enterprises (e.g., vendor and supplier). Transparency into the ERP system allows these partners to, for example, verify adherence to various contract terms. For example, when goods are received by the enterprise, payment should be made based on the received quantity within a defined time period. The promptness of payment ensures the employment of a current or previous day's closing exchange rate.

Furthermore, a lack of transparency between parties may lead to conflicts. For example, in cases involving automated contract execution, there may be no way for a third-party enterprise to validate that the automated code within the smart contract is implemented per the contact terms. The third-party enterprise may also have no mechanism to verify a current status of execution of a contract as they may not have been provided access (or they may have limited access) to the ERP system.

In view of the foregoing, and as described in further detail herein, implementations of the present disclosure provide for an ERP system that employs a distributed ledger. An example distributed ledger is the commonly known Blockchain (or blockchain). Blockchain is referenced within the present disclosure for purposes of illustration. It is contemplated, however, that any appropriate distributed ledger can be used in implementations of the present disclosure. A blockchain is a continuously growing list of records or blocks that are linked and secured using cryptography. Each block with the blockchain may include transaction data provided from transactions that have been executed in one or more contexts, such as negotiable instrument transactions, digital currency transactions, and so forth. In some examples, a single block may include transaction data provided from multiple transactions (e.g., multiple deposits of different checks by different people). A blockchain may grow as completed blocks are added with a new set of transactions thus forming a ledger of the transaction. Each block may include a hash pointer to a previous block and a timestamp along with the transaction data in a permanent manner.

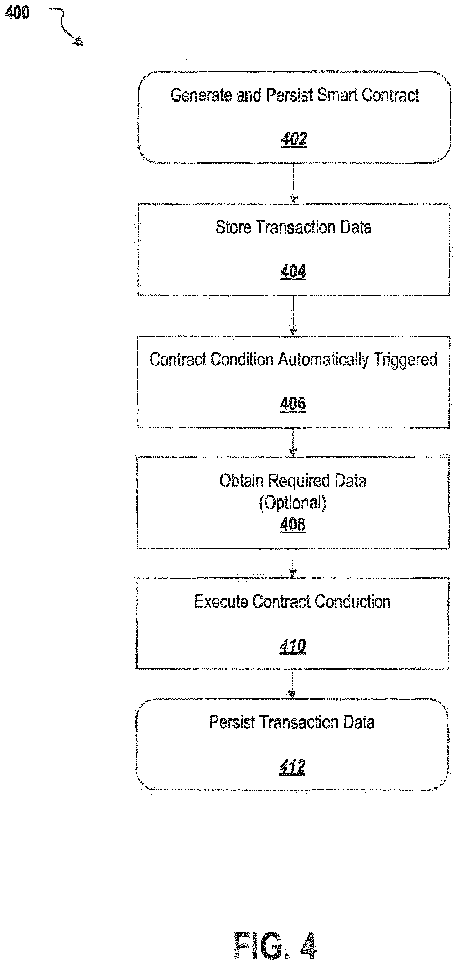

In some implementations, the transactions in a block of a blockchain are hashed and encoded into a Merkle tree (e.g., the transaction are leaf nodes of a Merkle tree). A Merkle tree (or hash-based tree) is a hash-based data structure that is a generalization of a hash list. A Merkle tree includes a tree structure in which each leaf node is a result of a CHF applied to the transaction to generate a hash value or "hash" and each non-leaf node is labelled with the cryptographic hash of the labels of its child nodes. Example CHF include the SHA-256, SHA-3, and MD5, among others. In general, the CHF receives information as input, and provides a hash value as output. The hash value can be a predetermined length. For example, SHA-256 outputs a 256-bit (32-byte, 64-character) hash value. In some examples, the hash value is a one-way hash value, in that the hash value cannot be 'un-hashed' to determine what the input was. Additionally, a Merkle tree may be implemented as a k-ary tree, which is a rooted tree data structure in which each node has no more than k children. For example, a Merkle tree may be implemented as binary tree where each node may have 0, 1, or 2 children. The Merkle root (or root hash) of such a binary tree can be generated by repeatedly hashing each pair of nodes until only one hash is left (See e.g., FIG. 4). In some examples, when the number of transactions is odd, the last hash is duplicated once to create an even number of leaf nodes. If a single detail in any of the transactions or the order of the transactions changes, so does the Merkle root. As such, the Merkle root summarizes all of the data in the related transactions, and can be stored in a block to maintain the integrity of the data. Thus the employment of a Merkle tree allows for a quick and simple test of whether a specific transaction is included in the set or not.

In general, blocks are added to the blockchain in a linear, chronological order by one or more computing devices in a peer-to-peer network of interconnected computing devices that execute a blockchain protocol. In short, the peer-to-peer network can be described as a plurality of interconnected nodes, each node being a computing device that uses a client to validate and relay transactions (e.g., deposits of checks). Each node maintains a copy of the blockchain, which is automatically downloaded to the node upon joining the peer-to-peer network. The blockchain protocol provides a secure and reliable method of updating the blockchain, copies of which are distributed across the peer-to-peer network, without use of a central authority.

Because all entities on the blockchain network may need to know all previous transactions (e.g., deposits, withdrawals, etc.) to validate a requested transaction, entities must agree on which transactions have actually occurred, and in which order. For example, if two entities observe different transaction histories, they will be unable to come to the same conclusion regarding the validity of a transaction. The blockchain enables the entities to come to an agreement as to transactions that have already occurred, and in which order. In short, and as described in further detail below, a ledger of transactions is agreed to based on the amount of work required to add a transaction to the ledger of transactions (e.g., add a block to the blockchain). In this context, the work is a task that is difficult for any single node (e.g., computing device) in the peer-to-peer network to quickly complete, but is relatively easy for a node (e.g., computing device) to verify.

The peer-to-peer network includes so-called miners (e.g., computing devices) that add blocks to a blockchain based on the blockchain protocol. In general, multiple miners validate transactions that are to be added to a block, and compete (e.g., perform work, as introduced above) to have their block added to the blockchain. Validation of transactions includes verifying digital signatures associated with respective transactions. For a block to be added to the blockchain, a miner must demonstrate a proof of work before their proposed block of transactions is accepted by the peer-to-peer network. A blockchain protocol includes a proof of work scheme that is based on a CHF, such as described above. The blockchain protocol can require multiple pieces of information as input to the CHF. For example, the input to the CHF can include a reference to the previous (most recent) block in the blockchain, details of the transaction(s) that are to be included in the to be created block, and a nonce value. A nonce value is a number added to a hashed block that, when rehashed, meets the difficulty level restrictions.

Multiple nodes may compete to hash a set of transactions and provide the next block that is to be added to the blockchain. The blockchain protocol provides a threshold hash to qualify a block to be added to the blockchain. For example, the threshold hash can include a predefined number of zeros (0's) that the hash value must have at the beginning (e.g., at least the first four characters of the hash value must each be zero). The higher the number of zeros, the more time-consuming it is to arrive at a qualifying hash value.

In accordance with the blockchain protocol, each miner in the peer-to-peer network receives transaction information for one or more transactions that are to be included in a block that is to be added next in the blockchain. Each miner provides the reference to the previous (most recent) block in the blockchain, details of the transaction(s) that are to be included in the to-be-created block, and the nonce value to the CHF to provide a hash value. If the hash value does not meet the threshold hash (e.g., the first four characters of the hash value are not each zero), the miner starts again to provide another hash value. If the hash value meets the threshold hash (e.g., at least the first four characters of the hash value are each zero), the respective miner successfully creates the next block that is to be added to the blockchain. Consequently, the respective miner's block is broadcasted across the peer-to-peer network. All other miners cease work (because one miner was already successful), and all copies of the blockchain are updated across the peer-to-peer network to append the block to the blockchain. Each miner may be required to produce hundreds or thousands of hash values, before any one miner provides a qualifying hash value (e.g., at least the first four characters of the hash value are each zero).

In some implantations, the distributed ledger or blockchain system can include one or more sidechains. A sidechain can be described as a blockchain that validates data from other blockchains. In some examples, a sidechain enables ledger assets (e.g., a digital currency) to be transferred between multiple blockchains.

The use of a distributed ledger within the described ERP system provides both transparency and auditability of stored and calculated transaction data to establish trust between participants without a central authority. As described above, the distributed ledger employed by the system is secured by a cryptography and consensus algorithm and is inherently immutable. The described distributed ledger based ERP system provides for security and verifiability of transactional data generated by the ERP system by utilizing the features of the distributed ledger. In some implementations, the distributed ledger employed by the described ERP system is a permissioned blockchain. A permission blockchain may include restriction of access to the nodes or blocks within the blockchain (e.g., the blockchain is not publically open to the outside world for access by default). In some implementations, a permission management module may be employed to manage access to the permissioned blockchain through, for example, permissions that are assigned to system users, such as third-party vendors, auditory, representatives from government agencies, and so forth. Such permissions may restrict access (e.g., read access) to specific transactions (e.g., those involving a specific supplier) or may grant access to the entire blockchain. In some implementations, the described ERP system may employ a transaction verification layer through which users may verify transactions based on, for example, root hashes (e.g., a root hash of all the blocks on the blockchain) and/or cryptographic proof of the blockchain state.

In some implementations, smart contracts (or self-executing contracts) may be stored on the permissioned blockchain. Smart contracts may include executable code which represents contract terms. As such, a smart contract not only defines the rules and penalties related to an agreement in the same way that a traditional contract does, but also automatically enforces those obligations. In some implementations, a smart contract may accomplish this by taking information as input, assigning a value to that input through the rules set out in the contract, and executing the actions required by those contractual clauses. For example, the smart contract may determine whether an asset should be sent to a destination entity or whether it should be returned to an originating entity.

Smart contacts may be coded in a programming language, such as Solidity^{™}. For example, a smart contract may be programed to deliver payment when an item is received. In this format, contracts could be converted to computer code, stored and replicated on the system, and supervised by a network of computers that run the blockchain.

In an example context employing the described ERP system, once a contract is finalized between an enterprise and a supplier/vendor, a smart contract is created and stored to the permissioned blockchain. The stored smart contract is immutable and may be executed automatically when a condition is met (e.g. the arrival of items from a supplier) in real-time.

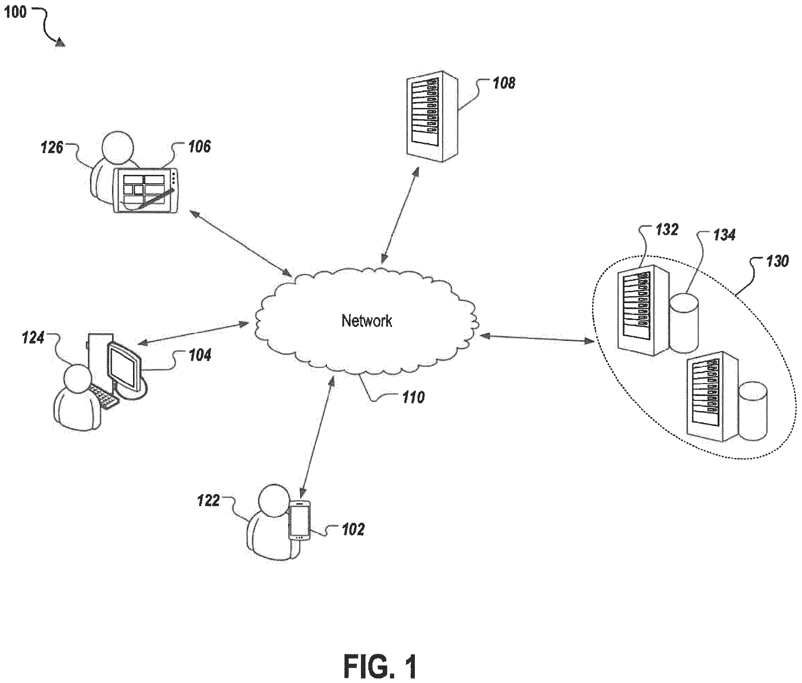

As used herein, the term "real-time" refers to transmitting or processing data without intentional delay given the processing limitations of a system, the time required to accurately obtain data and images, and the rate of change of the data and images. In some examples, "real-time" is used to describe the presentation of information obtained from components of a distributed-ledger based system, such as depicted in FIGS. 1-6.

FIG. 1 depicts an example environment 100 that can be employed to execute implementations of the present disclosure. The example system 100 includes computing devices 102, 104, 106, 108, a back-end system 130, and a network 110. In some implementations, the network 110 includes a local area network (LAN), wide area network (WAN), the Internet, or a combination thereof, and connects web sites, devices (e.g., the computing devices 102, 104, 106, 108) and back-end systems (e.g., the back-end system 130). In some implementations, the network 110 can be accessed over a wired and/or a wireless communications link. For example, mobile computing devices (e.g., the smartphone device 102 and the tablet device 106), can use a cellular network to access the network 110. In some examples, the users 122-126 may be working as agents for one of the participating clients in the consortium, such as described above. In some examples, the users 122-126 may be working as agents for different clients in the consortium.

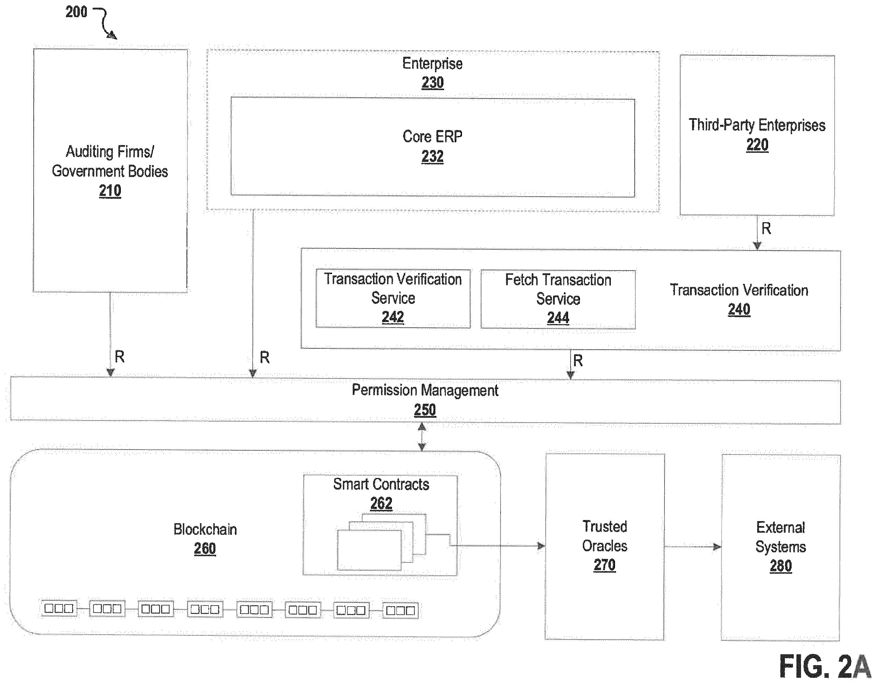

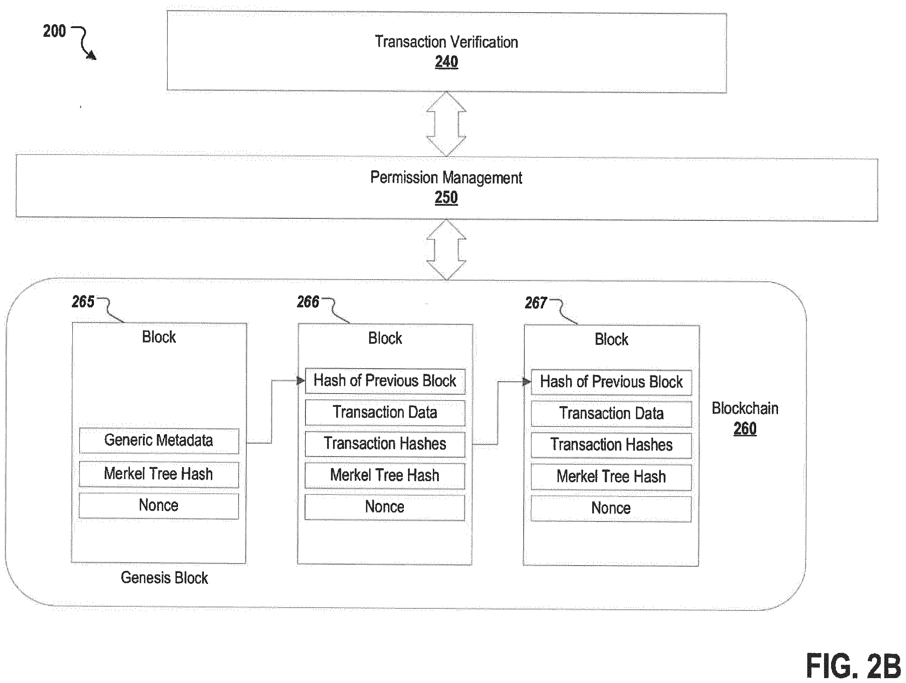

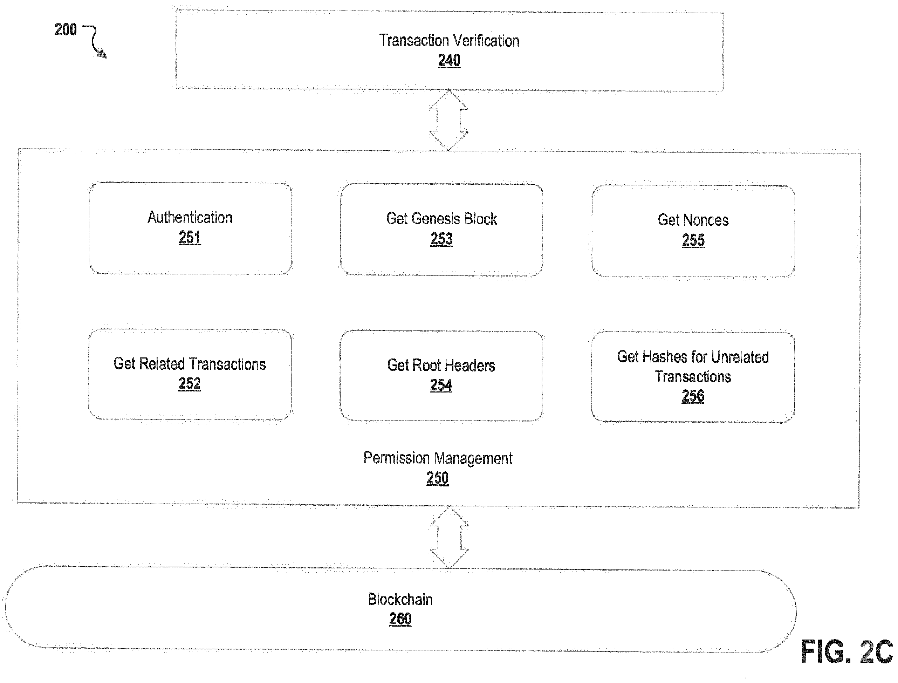

In the depicted example, the back-end system 130 includes at least one server system 132 and a data store 134. In some implementations, the at least one server system 132 hosts one or more computer-implemented services employed within the described ERP system, such as a permission management service, transaction verification service, or fetch transaction service (see FIG. 2), that users 122-126 can interact with using the respective computing devices 102-106. For example, the computing devices 102-106 may be used by respective users 122-126 to retrieve and verify transaction data regarding an associated third-party through services hosted by the back-end system 130. In some implementations, the back-end system 130 provides an application programming interface (API) services with which the server computing device 108 may communicate.

In some implementations, back-end system 130 may include server-class hardware type devices. In some implementations, back-end system 130 includes computer systems using clustered computers and components to act as a single pool of seamless resources when accessed through the network 110. For example, such implementations may be used in data center, cloud computing, storage area network (SAN), and network attached storage (NAS) applications. In some implementations, back-end system 130 is deployed using a virtual machine(s).

The computing devices 102, 104, 106 may each include any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In the depicted example, the computing device 102 is a smartphone, the computing device 104 is a desktop computing device, and the computing device 106 is a tablet-computing device. The server computing device 108 may include any appropriate type of computing device, such as described above for computing devices 102-106 as well as computing devices with server-class hardware. In some implementations, the server computing device 108 may include computer systems using clustered computers and components to act as a single pool of seamless resources. It is contemplated, however, that implementations of the present disclosure can be realized with any of the appropriate computing devices, such as those mentioned previously.

FIGS. 2A-2C depict an example ERP system 200 according to implementations of the present disclosure. As depicted in FIG. 2A, the example system 200 includes auditing firms and government bodies 210, third-party enterprises 220, enterprise 230 that provides a core ERP system 232, transaction verification layer 240 that provides transaction verification service 242 and fetch transaction service 244, permission management services 250, a blockchain 260, trusted oracles 270, and external systems 280.

In some implementations, the core ERP system 232 is provided by a back-end system, such as back-end system 130 of FIG. 1. As depicted in FIG. 2A, the core ERP system 232 is operated or managed by the enterprise 230. The core ERP integrates business functions and provides functional ERP modules, such as described above. Example ERP modules may include a sales and distribution module, a materials management module, a financials module, and so forth.

The auditing firms and government bodies 210 represent firms, agencies, and government bodies involved in, for example, statuary audits or governance of the enterprise 230. The third-party enterprises 220 represent third party enterprises, such as vendors and suppliers, that are in business with the enterprise 230. The ERP system 200 provides immutable transaction information for the ERP system in real-time to users representing the auditing firms and government bodies 210 or the third-party enterprises 220.

The blockchain 260 is employed to store ERP data used or generated by the core ERP system 232. In some implementations, the blockchain 260 is not completely public and access (e.g., read, write) is limited to a set of participants, as governed through the permission management services 250. In some implementations, the permissioned management services 250 provide and manage access to the ERP data stored in the blockchain 260 based on permissions that are assigned to various users. For example, users from one of the auditing firms or government bodies 210 may be granted access the entire state of persisted data while users from one of the third-party enterprises 220 may be granted access to only the transactions that directly or indirectly involve the respective third-party enterprise.

Data stored to the blockchain 260 may include ERP data 264 (e.g., ERP master data, ERP application data, and ERP transaction data) and smart contracts 262. In some cases, master data includes information about various vendors, customers, routing, materials, and so forth. In some cases, application data includes information about purchase orders, sale orders, production orders, deliveries, and so forth. The transaction data includes information about transactions conducted through the core ERP system 230 or uploaded to the ERP system 230 for storage in the blockchain 260. Such transactions may include delivery of goods, fulfillment of a purchase order, and payment to a vendor.

The smart contracts 262 may include programmatic implemented contract conditions that trigger based on a condition, such as described in detail above. For example, a transaction may be implemented and/or recorded through the core ERP system 230. The transaction may be stored to the blockchain 260 via the permission management service 250. The receipt and/or storage of this transaction information may trigger the implementation of a contract term programmatically captured within a smart contract stored on the block 260. For example, a payment contract between the enterprise 230 and one of the vendors 220 may be implemented as a smart contract that is stored in the blockchain 260. When a transaction for the delivery of goods specified by the payment contract is stored to the blockchain 260, the condition for the smart contract is met, and the funds required for payment, as specified by the contract, are released according to the programmatic instructions of the smart contract.

In some cases, a smart contract 262 may require external information, such as currency exchange prices, stock price in a particular stock exchange, and so forth. This information may be accessed from the external systems 280 through trusted oracles 270. In some implementations, external systems 280 generate real-world occurrences, such as the currency exchange price or share value. In some implementations, the trusted oracles 270 are agents that find and/or verify these real-world occurrences and provides this information to the blockchain to be used by the stored smart contracts. For example, a smart contact may require information about a current currency exchange price to evaluate an exact amount to be paid to a vendor.

In some implementations, the transaction verification layer 240 provides APIs for the third-party enterprises 220 to access and verify data pertaining to them from the blockchain 260. These APIs may be implemented through the transaction verification service 242 and the fetch transaction service 244. The transaction verification service 242 and the fetch transaction service 244 in turn may employ the APIs or services provided though the permission management service 250 to access the data stored on the blockchain 260 (See FIG 2C). In some implementations, the fetch transaction service 244 is used to retrieve data to which a vendor has read access. For example, a vendor may access delivery information regarding goods that have been sent to the enterprise 230. In some implementations, the transaction verification service 242 is used to validate retrieved transaction data. For example, the root hashes of the blockchain 260 as well as cryptographic proofs pertaining to parts of the blockchain state may be accessed.

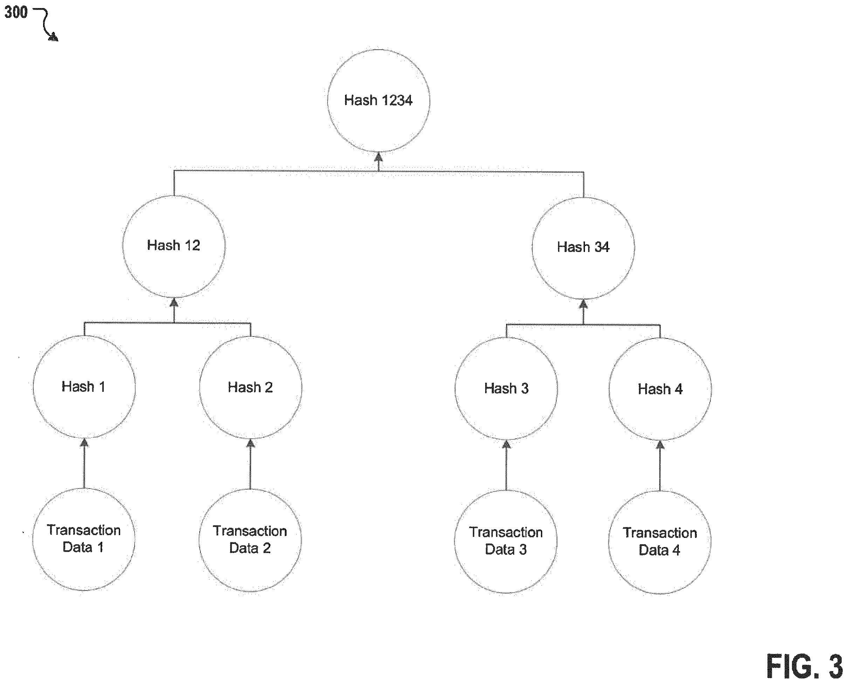

A portion (three blocks, 265, 266, and 267) of the blockchain 260 is depicted in FIG. 2B. The three blocks 265, 266, and 267 are depicted for illustration purposes as a blockchain typically has many blocks in the chain. Block 265 represents the genesis block, which is the first block in the blockchain. Block 266 and 267 represent transaction blocks. Each of the blocks 265, 266, and 267 includes a transaction root hash, which is the Merkle root value (see FIG. 3) for the stored transaction data (or the generic metadata for the genesis block 265), and a nonce value for the block. In some implementations, the nonce value is an arbitrary number with a value that is set so that hash for the block (used as the previous block hash for the next block) will include a run of leading zeros. In some cases, the genesis block includes generic metadata, such as a company name or address of the hosting entity. Transaction blocks 266 and 267 include transaction data that is stored to the block chain as well as hashed values for the transactions. In some implementations, the transaction blocks 266 and 267 also include a hash value for the previous block in the blockchain 260. Each of the blocks 265, 266, and 267 may also include metadata (not shown), such as timestamp values as so forth.

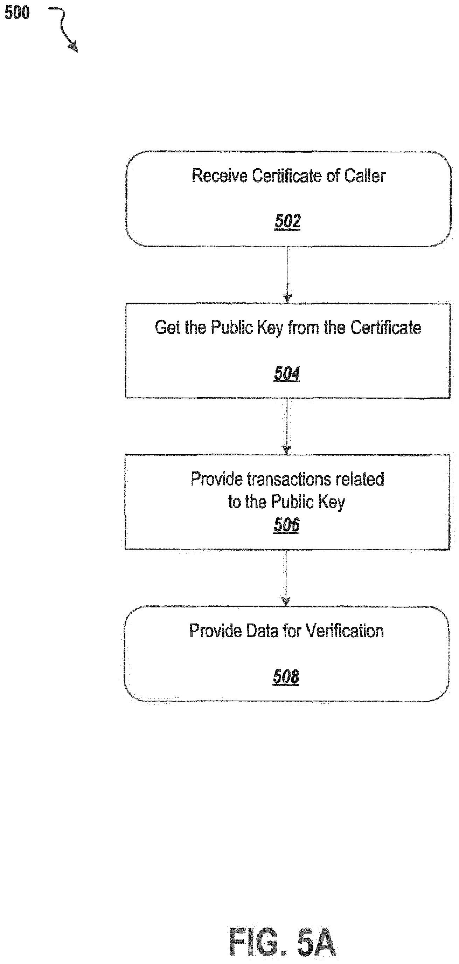

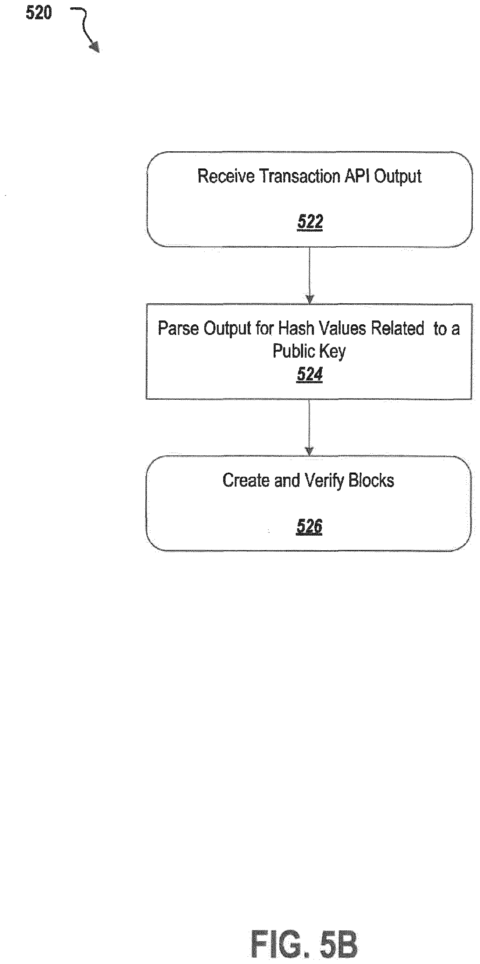

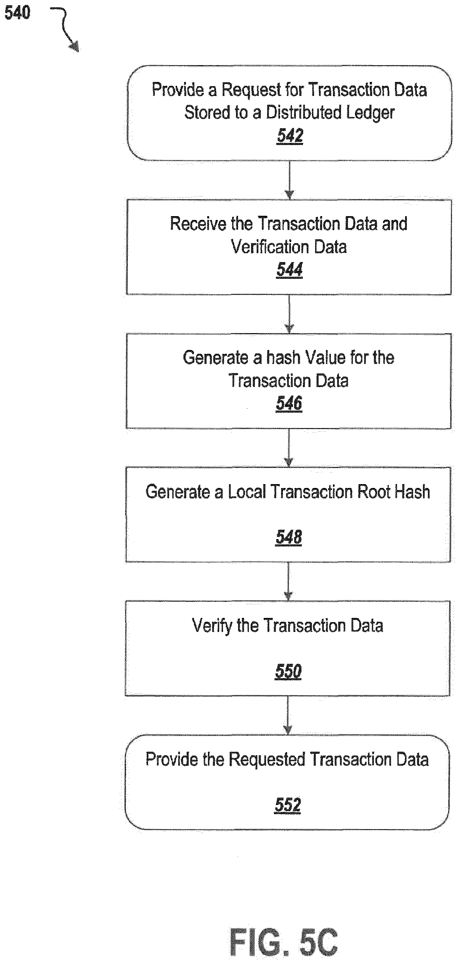

Examples of services provided by the permission management service 250 are depicted in FIG 2B. In general, these exposed API services provide access to transaction data and allow verification of the data to the third-party enterprise 220 and the auditing firms and government bodies 210. In some implementations, these services receive and respond to API calls from, for example, the transaction verification layer 240. For example, a vendor request may request, through the transaction verification layer 250 making an API call to the provided permission management services 250, transaction data for a transaction to which they have access (e.g., they are a party to the transaction or have been granted access for some other reason or purpose). In another example, the vendor may request all of or a subset of the transactions to which they are a party. In any of these examples, the permission management services 250 provides the requested transaction data and the data required to verify the authenticity of the received data. This verification data may include 1) the genesis block data, 2) the transaction root hash, 3) the link to the previous block, 4) the nonce value for the transaction block, and 5) the hashes for the restricted transactions. This information, together with 6) the requested transactions data can be employed by, for example, transaction verification service 242, to verify the authenticity of the transaction data (See FIG. 5A).

The permission management services 250 depicted in FIG. 2C includes an authentication service 251, a get-related-transactions service 252, a get-genesis-block service 253, a get-root-headers service 254, a get-nonces service 255, and a get-hashes-for-unrelated-transactions service 256. In some implementations, the authentication service 251 provides authentication to the services based on, for example, a digital certificate or credential based authentication. In some implementations, the get-related-transactions service 252 returns the transactions that the user has permission to access. For example, the transaction may be returned based on a public key provided by the user. In some implementations, the get-genesis-block service 253, returns the genesis block data. In some implementations, the get-root-headers service 254 returns the root headers for the block, which may include, for example, metadata. In some implementations, the get-nonces service 255 returns the nonces of each transaction block that is accessed. In some implementations, the get-hashes-for-unrelated-transactions service 256 returns the hash values for the transactions that the user does not have permission to access.

FIG. 3 depicts a Merkle or hash-based tree 300 that may be employed by a blockchain, such as blockchain 260. The depicted Merkle tree includes four nodes for illustration purposes as much larger nodes may be employed in a blockchain for the described ERP system. The Merkle tree includes four transaction data nodes (transaction data nodes 1-4). The hash nodes 1-4 represent a hash value that can be generated from each transaction according to the selected CHF employed in the blockchain. The hash 12 node represents the hash value that can be generated from the hash 1 value and the hash 2 value by the selected CHF, while hash node 34 represents the hash values that can be generated from the hash 3 value and the hash 4 value. The hash 1234 nodes represents the hash value that can be generated from the hash 12 value and the hash 34 value by the selected CHF.

FIG. 4 depicts a flow diagram of an example process 400 for the fulfillment of a contract programmatically through a smart contract stored to a blockchain. For clarity of presentation, the description that follows generally describes the process 400 in the context of FIGS. 1, 2A, 2B, 3, and 6. However, it will be understood that the process 400 may be performed, for example, by any other suitable system, environment, software, and hardware, or a combination of systems, environments, software, and hardware as appropriate. In some implementations, various operations of the process 400 can be run in parallel, in combination, in loops, or in any order.

At 402, a smart contract, such as for a payment contract between a third-party enterprise and an enterprise, is created and persisted in a blockchain. As an example, the contract condition implemented by the smart contract includes sending payment to the third-party enterprise based on a quantity of material received from the third-party enterprise by the enterprise within hours of the receipt of the materials with the exchange rate (e.g., Euro to Dollar) of the previous day's closing rate. From 402, the process 400 proceeds to 404.

At 404, transaction data regarding the delivery of the material from the third-party enterprise is stored to the blockchain. From 404, the process 400 proceeds to 406.

At 406, the programmatic implementation of the contract condition is triggered automatically when the transaction data regarding the received material is stored to the blockchain. From 406, the process 400 proceeds to 408.

At 408, which is an optional step, data required for the fulfilment of the contract condition is obtained from an external system through a trusted oracle. For example, the previous day's closing rate (Euro to Dollar), to be used for payment, may be retrieved from the external system through the trusted oracle. From 408, the process 400 proceeds to 410.

At 410, the programmatic implementation of the contract condition is executed. For example, payment based on the previous day's closing rate is provided to the third-party enterprise through the programmatic implementation of the contract condition. From 410, the process 400 proceeds to 412.

At 412, the transaction data regarding execution of the contract condition is persisted to the blockchain. For example, the delivery of the material and the transaction data regarding payment of the third- party enterprise is persisted to the blockchain. The third-party enterprise can access this data pertaining to quantity and delivery of material from blockchain through, for example, the transaction verification layer 240 of FIGS 2A and 2B. This provides the third-party the ability to track the status of payment (as per contract terms coded in a smart contract) in real-time and to verify the enterprise claim on payment status, thus reducing the number of conflicts. Furthermore, auditors and/or government agencies can access the entire state of the blockchain (e.g., all the records) in real-time. From 412, the process 400 ends.

FIGS. 5A-5C depicts flow diagrams of an example processes 500, 520, and 540 respectively that can be employed within a distributed ledger based ERP system. For clarity of presentation, the description that follows generally describes the processes 500, 520, and 540 in the context of FIGS. 1-4 and 6. However, it will be understood that the processes 500, 520, and 540 may be performed, for example, by any other suitable system, environment, software, and hardware, or a combination of systems, environments, software, and hardware as appropriate. In some implementations, various operations of the processes 500, 520, and 540 can be run in parallel, in combination, in loops, or in any order.

For process 500, at 502, a digital certificate is received by a transaction API. For example, as described above, an agent for a vendor may provide the digital certificate assigned to the vendor and request transactions that are associated with the vender based on selected search criteria (e.g., during a particular month). From 502, the process 500 proceeds to 504.

At 504, the public key associated with the digital certificate is retrieved. For example, the public key information may be stored in a database or provide by another third-party key hosting service. From 502, the process 500 proceeds to 506.

At 506, the transactions stored to the blockchain, such as blockchain 206 from FIGS. 2A-2B, that are associated with the provided digital signature (e.g., the transaction associated with the vendor) are retrieved. From 506, the process 500 proceeds to 508.

At 508, the transaction data is provided to the requester (e.g., the agent of the vendor). Additionally verification data is also provided. The verification data may include the all of the transaction from the Genesis block, and data from the other blocks. The data from the other block may include, the unique block hashes, the previous block hashes, the nonce value, and the Merkel Tree Root (See. FIG. 3). From 508, the process 500 ends.

For process 520, at 522 the output from the transaction API (See FIG. 5A) is received. From 522, the process 520 proceeds to 524.

At 524, the hashes of the transaction associated with the public key (e.g., for the vendor) are parsed from the received data. From 524, the process 520 moves to 526.

At 526, the blocks of information received from the transaction API call are created and verified based on the verification data (See step 508 of process 500). From 526, the process 520 ends.

For process 540, at 542, a request for transaction data stored to the distributed ledger is provided to a permission management service. The transaction data including information regarding a transaction involving a third-party enterprise. In some implementations, before providing the request for the transaction data to the permission management service, the client device is authenticated based on a credential and the request for the transaction data is received from the client device. In some implementations, the credential is a digital certificate. In some implementations, the transaction involving a third-party enterprise includes receiving goods from the third-party enterprise. From 542, the process 540 proceeds to 544.

At 544, the transaction data, a transaction root hash, and verification data is received from the permission management service. In some implementations, the third-party enterprise is restricted from access to other transaction data stored to the distributed ledger. In some implementations, the verification data includes hash values for the other transaction data. In some implementations, the verification data includes genesis block data, the genesis block data is a first block in the distributed ledger, and the genesis block data includes metadata about a hosting enterprise that provides an Enterprise Resource Planning (ERP) solution through the distributed ledger. In some implementations, the verification data includes a nonce value of a block in the distributed ledger that stores the transaction data. In some implementations, the verification data provides a cryptographic proof of validity for the transaction data. From 544, the process 540 proceeds to 546.

At 546, a hash value for the transaction data is generated from a CHF. In some implementations, the CHF is one of SHA-256, SHA-3, or MD5. From 544, the process 540 proceeds to 546.

At 548, a local transaction root hash is generated based on the generated hash value for the transaction data and the received verification data. From 548, the process 540 proceeds to 550.

At 550, the transaction data is verified based on comparing the local transaction root hash to the received transaction root hash. In some implementations, the transaction data is stored to the distributed ledger triggering an execution of a contract condition implemented through a smart contract. In some implementations, the contract condition implemented through the smart contract includes providing payment to the third-party enterprise for a receipt of the goods. In some implementations, the execution of the contract condition includes determining external factors through a trusted oracle. These external factors may include, for example, a current currency exchange price. From 550, the process 540 proceeds to 552.

At 552, the requested transaction data is provided to the client device based on the verification of the transaction data. In some implementations, the client device is authenticated based on the credential of the third-party enterprise. From 552, the process 540 end.

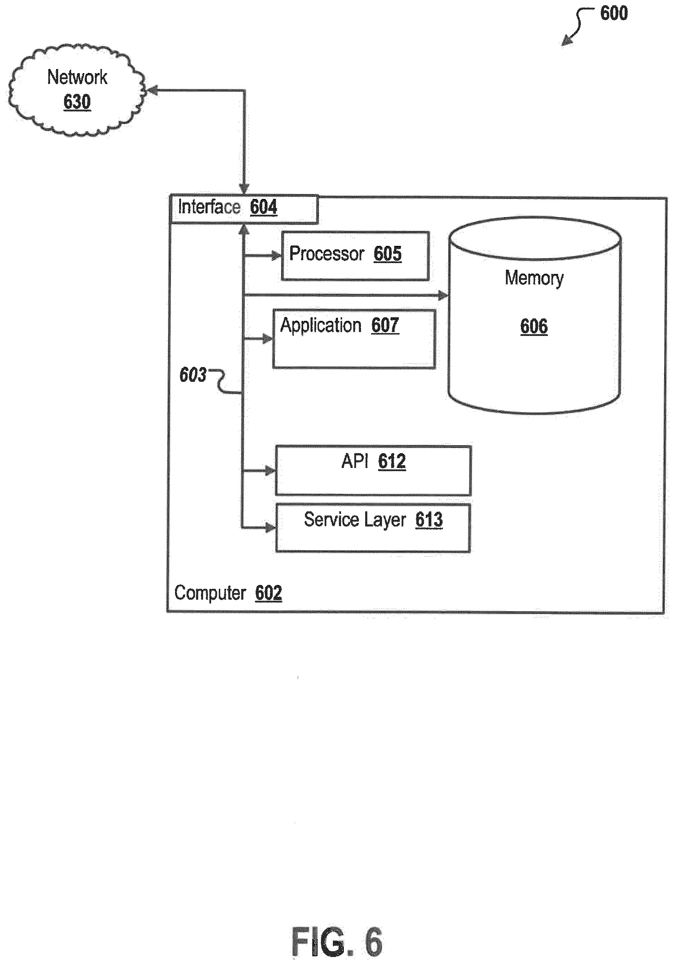

FIG. 6 depicts a block diagram of an exemplary computer system 600 used to provide computational functionalities associated with described algorithms, methods, functions, processes, flows, and procedures as described in the instant disclosure, according to an implementation. The illustrated computer 602 is intended to encompass any computing device such as a server, desktop computer, laptop or notebook computer, wireless data port, smart phone, personal data assistant (PDA), tablet computing device, one or more processors within these devices, or any other suitable processing device, including both physical or virtual instances (or both) of the computing device. Additionally, the computer 602 may comprise a computer that includes an input device, such as a keypad, keyboard, touch screen, or other device that can accept user information, and an output device that conveys information associated with the operation of the computer 602, including digital data, visual, or audio information (or a combination of information), or a graphical user interface (GUI).

The computer 602 can serve in a role as a client, network component, a server, a database or other persistency, or any other component (or a combination of roles) of a computer system for performing the subject matter described in the instant disclosure. The illustrated computer 602 is communicably coupled with a network 630. In some implementations, one or more components of the computer 602 may be configured to operate within environments, including cloud-computing-based, local, global, or other environment (or a combination of environments).

At a high level, the computer 602 is an electronic computing device operable to receive, transmit, process, store, or manage data and information associated with the described subject matter. According to some implementations, the computer 602 may also include or be communicably coupled with an application server, e-mail server, web server, caching server, streaming data server, business intelligence (BI) server, or other server (or a combination of servers).

The computer 602 can receive requests over network 630 from a client application (for example, executing on another computer 602) and responding to the received requests by processing the said requests in an appropriate software application. In addition, requests may also be sent to the computer 602 from internal users (for example, from a command console or by other appropriate access method), external or third parties, other automated applications, as well as any other appropriate entities, individuals, systems, or computers.

Each of the components of the computer 602 can communicate using a system bus 603. In some implementations, any or all of the components of the computer 602, both hardware or software (or a combination of hardware and software), may interface with each other or the interface 604 (or a combination of both) over the system bus 603 using an API 612 or a service layer 613 (or a combination of the API 612 and service layer 613). The API 612 may include specifications for routines, data structures, and object classes. The API 612 may be either computer-language independent or dependent and refer to a complete interface, a single function, or even a set of APIs. The service layer 613 provides software services to the computer 602 or other components (whether or not illustrated) that are communicably coupled to the computer 602. The functionality of the computer 602 may be accessible for all service consumers using this service layer. Software services, such as those provided by the service layer 613, provide reusable, defined business functionalities through a defined interface. For example, the interface may be software written in JAVA, C++, or other suitable language providing data in extensible markup language (XML) format or other suitable format. While illustrated as an integrated component of the computer 602, alternative implementations may illustrate the API 612 or the service layer 613 as stand-alone components in relation to other components of the computer 602 or other components (whether or not illustrated) that are communicably coupled to the computer 602. Moreover, any or all parts of the API 612 or the service layer 613 may be implemented as child or sub-modules of another software module, enterprise application, or hardware module without departing from the scope of this disclosure.

The computer 602 includes an interface 604. Although illustrated as a single interface 604 in FIG. 6, two or more interfaces 604 may be used according to particular needs, desires, or particular implementations of the computer 602. The interface 604 is used by the computer 602 for communicating with other systems in a distributed environment that are connected to the network 630 (whether illustrated or not). Generally, the interface 604 comprises logic encoded in software or hardware (or a combination of software and hardware) and operable to communicate with the network 630. More specifically, the interface 604 may comprise software supporting one or more communication protocols associated with communications such that the network 630 or interface's hardware is operable to communicate physical signals within and outside of the illustrated computer 602.

The computer 602 includes a processor 605. Although illustrated as a single processor 605 in FIG. 6, two or more processors may be used according to particular needs, desires, or particular implementations of the computer 602. Generally, the processor 605 executes instructions and manipulates data to perform the operations of the computer 602 and any algorithms, methods, functions, processes, flows, and procedures as described in the instant disclosure.

The computer 602 also includes a memory 606 that holds data for the computer 602 or other components (or a combination of both) that can be connected to the network 630 (whether illustrated or not). For example, memory 606 can be a database storing data consistent with this disclosure. Although illustrated as a single memory 606 in FIG. 6, two or more memories may be used according to particular needs, desires, or particular implementations of the computer 602 and the described functionality. While memory 606 is illustrated as an integral component of the computer 602, in alternative implementations, memory 606 can be external to the computer 602.

The application 607 is an algorithmic software engine providing functionality according to particular needs, desires, or particular implementations of the computer 602, particularly with respect to functionality described in this disclosure. For example, application 607 can serve as one or more components, modules, applications, etc. Further, although illustrated as a single application 607, the application 607 may be implemented as multiple applications 607 on the computer 602. In addition, although illustrated as integral to the computer 602, in alternative implementations, the application 607 can be external to the computer 602.

There may be any number of computers 602 associated with, or external to, a computer system that includes computer 602, with each computer 602 communicating over network 630. Further, the term "client," "user," and other appropriate terminology may be used interchangeably as appropriate without departing from the scope of this disclosure. Moreover, this disclosure contemplates that many users may use one computer 602, or that one user may use multiple computers 602.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, that is, one or more modules of computer program instructions encoded on a tangible, non-transitory, computer-readable computer-storage medium for execution by, or to control the operation of, data processing apparatus. Alternatively or in addition, the program instructions can be encoded on an artificially generated propagated signal, for example, a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of computer-storage mediums.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be or further include special purpose logic circuitry, for example, a central processing unit (CPU), a field programmable gate array (FPGA), or an application-specific integrated circuit (ASIC). In some implementations, the data processing apparatus or special purpose logic circuitry (or a combination of the data processing apparatus or special purpose logic circuitry) may be hardware- or software-based (or a combination of both hardware- and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, for example, a CPU, an FPGA, or an ASIC.

Computers suitable for the execution of a computer program can be based on general or special purpose microprocessors, both, or any other kind of CPU. Generally, a CPU will receive instructions and data from a read-only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable storage device, for example, a universal serial bus (USB) flash drive, to name just a few.

Computer-readable media (transitory or non-transitory, as appropriate) suitable for storing computer program instructions and data include all forms of non-volatile memory, media and memory devices, including by way of example semiconductor memory devices, for example, erasable programmable read-only memory (EPROM), electrically erasable programmable read-only memory (EEPROM), and flash memory devices; magnetic disks, for example, internal hard disks or removable disks; magneto-optical disks; and Compact Disc Read-Only Memory (CD-ROM), Digital Versatile Disk (DVD)+/-R, DVD-RAM, and DVD-ROM disks. The memory may store various objects or data, including caches, classes, frameworks, applications, backup data, jobs, web pages, web page templates, database tables, repositories storing dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, for example, a CRT (cathode ray tube), LCD (liquid crystal display), LED (Light Emitting Diode), or plasma monitor, for displaying information to the user and a keyboard and a pointing device, for example, a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A GUI may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of UI elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), for example, a communication network. Examples of communication networks include a LAN, a radio access network (RAN), a metropolitan area network (MAN), a WAN, Worldwide Interoperability for Microwave Access (WIMAX), a wireless local area network (WLAN) using, for example, 802.11 a/b/g/n or 802.20 (or a combination of 802.1 lx and 802.20 or other protocols consistent with this disclosure), all or a portion of the Internet, or any other communication system or systems at one or more locations (or a combination of communication networks). The network may communicate with, for example, Internet Protocol (IP) packets, Frame Relay frames, Asynchronous Transfer Mode (ATM) cells, voice, video, data, or other suitable information (or a combination of communication types) between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware or software (or a combination of hardware and software), may interface with each other or the interface using an API or a service layer (or a combination of API and service layer). The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers using this service layer. Software services provide reusable, defined business functionalities through a defined interface. For example, the interface may be software written in JAVA, C++, or other suitable language providing data in extensible markup language (XML) format or other suitable format. The API or service layer (or a combination of the API and the service layer) may be an integral or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the implementations described earlier should not be understood as requiring such separation or integration in all implementations, and it should be understood that the described program components and systems can generally be integrated together in a single software product or packaged into multiple software products. Accordingly, the earlier description of example implementations does not define or constrain this disclosure.

Furthermore, any claimed implementation described later is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A computer-implemented method for receiving and verifying transaction data stored to a distributed ledger, wherein a hosting enterprise provides an Enterprise Resource Planning, ERP, solution through the distributed ledger, the method being executed by one or more processors and comprising:
authenticating a client device based on a credential of a third-party enterprise;
receiving a request for transaction data from the client device, wherein the transaction data includes information regarding a transaction involving the third-party enterprise;
providing, to a permission management service, the request for the transaction data stored to the distributed ledger;
receiving the transaction data, a transaction root hash, and verification data from the permission management service;
generating a hash value for the transaction data from a cryptographic hash function (CHF);
generating a local transaction root hash based on the generated hash value for the transaction data and the received verification data;
verifying the transaction data based on comparing the local transaction root hash to the received transaction root hash; and
providing the requested transaction data to the client device based on the verification of the transaction data.

2. The computer-implemented method of claim 1, wherein the third-party enterprise is restricted from access to other transaction data stored to the distributed ledger, and wherein optionally the verification data includes hash values for the other transaction data.

3. The computer-implemented method of claim 1 or 2, wherein the verification data includes genesis block data, wherein the genesis block data is a first block in the distributed ledger, and wherein the genesis block data includes metadata about the hosting enterprise.

4. The computer-implemented method of any one of the preceding claims, wherein the verification data includes a nonce value of a block in the distributed ledger that stores the transaction data.

5. The computer-implemented method of any one of the preceding claims, wherein the credential is a digital certificate.

6. The computer-implemented method of any one of the preceding claims, wherein the CHF is one of secure hash algorithm 256 (SHA-256), SHA-3, or message digest 5 (MD5).

7. The computer-implemented method of any one of the preceding claims, wherein the verification data provides a cryptographic proof of validity for the transaction data.

8. One or more non-transitory computer-readable storage media coupled to one or more processors and having instructions stored thereon which, when executed by the one or more processors, cause the one or more processors to perform operations according to a method of any one of the preceding claims.

9. An Enterprise Resource Planning (ERP) solution system, comprising:
one or more processors; and
a computer-readable storage device coupled to the one or more processors and having instructions stored thereon which, when executed by the one or more processors, cause the one or more processors to perform operations according to any one of claim 1 to 7.

## Patentansprüche

1. Ein computerimplementiertes Verfahren zum Empfangen und Verifizieren von Transaktionsdaten, die in einem *Distributed-Ledger* gespeichert sind, wobei ein Hosting-Unternehmen eine *Enterprise Resource Planning* (ERP)-Lösung über den *Distributed-Ledger* bereitstellt, wobei das Verfahren von einem oder mehreren Prozessoren ausgeführt wird und Folgendes umfasst:
Authentifizieren eines Client-Geräts auf der Grundlage eines Berechtigungsnachweises eines Drittunternehmens;
Empfangen einer Anfrage nach Transaktionsdaten vom Client-Gerät, wobei die Transaktionsdaten Informationen bezüglich einer Transaktion beinhalten, an der das Drittunternehmen beteiligt ist;
Bereitstellen, für einen Berechtigungsverwaltungsdienst, der Anfrage nach den Transaktionsdaten, die im *Distributed-Ledger* gespeichert sind;
Empfangen der Transaktionsdaten, eines Transaktions-Stamm-Hashes und von Verifizierungsdaten von dem Berechtigungsverwaltungsdienst;
Erzeugen eines Hash-Wertes für die Transaktionsdaten aus einer kryptographischen Hash-Funktion (*cryptographic hash function* - CHF);
Erzeugen eines lokalen Transaktions-Stamm-Hashes auf der Grundlage des erzeugten Hash-Wertes für die Transaktionsdaten und der empfangenen Verifizierungsdaten;
Verifizieren der Transaktionsdaten basierend auf dem Vergleichen des lokalen Transaktions-Stamm-Hashes mit dem empfangenen Transaktions-Stamm-Hash; und
Bereitstellen der angeforderten Transaktionsdaten für das Client-Gerät auf der Grundlage des Verifizierens der Transaktionsdaten.

2. Das computerimplementierte Verfahren nach Anspruch 1, wobei das Drittunternehmen vom Zugriff auf andere Transaktionsdaten, die im *Distributed-Ledger* gespeichert sind, ausgeschlossen ist, und wobei optional die Verifizierungsdaten Hash-Werte für die anderen Transaktionsdaten beinhalten.

3. Das computerimplementierte Verfahren nach Anspruch 1 oder 2, wobei die Verifizierungsdaten Genesis-Block-Daten enthalten, wobei die *Genesis-Block-*Daten ein erster Block im *Distributed-Ledger* sind und wobei die *Genesis-Block-*Daten Metadaten über das Hosting-Unternehmen beinhalten.

4. Das computerimplementierte Verfahren nach irgendeinem der vorstehenden Ansprüche, wobei die Verifizierungsdaten einen *Nonce*-Wert eines Blocks im *Distributed-Ledger* beinhalten, der die Transaktionsdaten speichert.

5. Das computerimplementierte Verfahren nach irgendeinem der vorstehenden Ansprüche, wobei der Berechtigungsnachweis ein digitales Zertifikat ist.

6. Das computerimplementierte Verfahren nach irgendeinem der vorstehenden Ansprüche, wobei die CHF eine der folgenden ist: *Secure Hash Algorithm* 256 (SHA-256), SHA-3, oder *Message Digest 5* (MD5).

7. Das computerimplementierte Verfahren nach irgendeinem der vorstehenden Ansprüche, wobei die Verifizierungsdaten einen kryptographischen Gültigkeitsnachweis für die Transaktionsdaten liefern.

8. Ein oder mehrere nicht-flüchtige, computerlesbare Speichermedien, die mit einem oder mehreren Prozessoren gekoppelt sind und auf denen Anweisungen gespeichert sind, die, wenn sie von dem einen oder den mehreren Prozessoren ausgeführt werden, den einen oder die mehreren Prozessoren veranlassen, Vorgänge gemäß einem Verfahren nach irgendeinem der vorstehenden Ansprüche durchzuführen.

9. Ein *Enterprise Resource Planning* (ERP)-Lösungssystem, das Folgendes umfasst:
einen oder mehrere Prozessoren; und
eine computerlesbare Speichervorrichtung, die mit dem einen oder den mehreren Prozessoren gekoppelt ist und auf der Befehle gespeichert sind, die, wenn sie von dem einen oder den mehreren Prozessoren ausgeführt werden, den einen oder die mehreren Prozessoren veranlassen, Vorgänge nach irgendeinem der Ansprüche von 1 bis 7 durchzuführen.

## Revendications

1. Un procédé mis en œuvre par ordinateur pour recevoir et vérifier des données de transaction stockées dans un registre distribué (*distributed ledger*), sachant qu'une entreprise hôte fournit une solution par progiciel de gestion intégré, PGI, (*Enterprise Resource Planning* - ERP), par l'intermédiaire du registre distribué, le procédé étant exécuté par un ou plusieurs processeurs et comprenant le fait de :
authentifier un dispositif client sur la base d'un justificatif d'identité d'une entreprise tierce ;
recevoir une demande de données de transaction de la part du dispositif client, sachant que les données de transaction incluent des informations concernant une transaction impliquant l'entreprise tierce ;
fournir, à un service de gestion des autorisations, la demande de données de transaction stockées dans le registre distribué ;
recevoir les données de transaction, un hachage racine de transaction, et des données de vérification du service de gestion des autorisations ;
générer une valeur de hachage pour les données de transaction à partir d'une fonction de hachage cryptographique (*cryptographie hash function* - CHF) ;
générer un hachage racine de transaction local sur la base de la valeur de hachage générée pour les données de transaction et les données de vérification reçues ;
vérifier les données de transaction sur la base de la comparaison entre le hachage racine de transaction local et le hachage racine de transaction reçue ; et de
fournir les données de transaction demandées au dispositif client sur la base de la vérification des données de transaction.

2. Le procédé mis en œuvre par ordinateur d'après la revendication 1, sachant que l'accès de l'entreprise tierce aux autres données de transaction stockées dans le registre distribué est restreint, et sachant que facultativement les données de vérification incluent des valeurs de hachage pour les autres données de transaction.

3. Le procédé mis en œuvre par ordinateur d'après la revendication 1 ou 2, sachant que les données de vérification incluent des données de bloc Genesis, sachant que les données de bloc Genesis sont un premier bloc dans le registre distribué, et sachant que les données de bloc Genesis incluent des métadonnées sur l'entreprise hôte.

4. Le procédé mis en œuvre par ordinateur d'après l'une quelconque des revendications précédentes, sachant que les données de vérification incluent une valeur de nonce d'un bloc dans le registre distribué qui stocke les données de transaction.

5. Le procédé mis en œuvre par ordinateur d'après l'une quelconque des revendications précédentes, sachant que le justificatif d'identité est un certificat numérique.

6. Le procédé mis en œuvre par ordinateur d'après l'une quelconque des revendications précédentes, sachant que la CHF est l'un des suivants : un algorithme de hachage sécurisé 256 (SHA-256), SHA-3, ou *Message Digest* 5 (MD5).

7. Le procédé mis en œuvre par ordinateur d'après l'une quelconque des revendications précédentes, sachant que les données de vérification fournissent une preuve cryptographique de validité pour les données de transaction.

8. Un ou plusieurs supports de stockage non transitoires lisibles par ordinateur couplés à un ou plusieurs processeurs et sur lesquels sont stockées des instructions qui, lorsqu'elles sont exécutées par le ou les processeurs, amènent le ou les processeurs à effectuer des opérations conformément à un procédé d'après l'une quelconque des revendications précédentes.

9. Un système de solution par progiciel de gestion intégré, PGI, (*Enterprise Resource Planning* - ERP), comprenant :
un ou plusieurs processeurs ; et
un dispositif de stockage lisible par ordinateur couplé aux un ou plusieurs processeurs et sur lequel sont stockées des instructions qui, lorsqu'elles sont exécutées par les un ou plusieurs processeurs, amènent les un ou plusieurs processeurs à effectuer des opérations d'après l'une quelconque des revendications de 1 à 7.
